# EUROPÄISCHE PATENTSCHRIFT

(11) **EP 0 391 085 B1**
(45) Veröffentlichungstag und Bekanntmachung des Hinweises auf die Patenterteilung: **28.04.1993**
(21) Anmeldenummer: 90104428.9
(22) Anmeldetag: 08.03.1990
(51) Int. Cl.: B23Q 3/155, B25J 15/04, B23K 9/28

(54) **Vorrichtung zum Befestigen und Wechseln von Werkzeugen**
Device for changing and clamping tools
Dispositif pour fixer et changer les outils

(30) Priorität: 05.04.1989 DE 3911461
(43) Veröffentlichungstag der Anmeldung: 10.10.1990
(73) Patentinhaber: Dinse GmbH, D-22041 Hamburg (DE)
(72) Erfinder: Dinse, Wilhelm, (DE)
(74) Vertreter: von Raffay, Vincenz, Dipl.-Ing.

(56) Entgegenhaltungen:
- EP-A- 0 246 384
- DE-A- 3 713 619
- GB-A- 2 105 236
- GB-A- 2 143 800

## Beschreibung

Die Erfindung betrifft eine Vorrichtung zum Befestigen und Wechseln von Werkzeugen an bewegbaren Arbeitsmaschinen, z.B. Roboterarmen.

Derartige Spann- und Wechselvorrichtungen sind in den unterschiedlichsten Ausführungsformen bekannt. Sie dienen dem Zweck, an einem Arbeitsmaschinenteil unterschiedlichste Werkzeuge zu befestigen und das Wechseln möglichst schnell und für den Arbeitsablauf unproblematisch durchzuführen. Wenn beispielsweise Schweißgeräte zum Elektro- oder Plasmaschweißen an der Roboterhand eines Roboterarmes befestigt und schnell ausgetauscht werden sollen, so werden derartige Vorrichtungen eingesetzt. Diese Vorrichtungen bestehen aus einem Halteelement, das an der Roboterhand befestigt ist, aus einem Spannelement, das an jedem zu verwendenden Werkzeug befestigt ist und aus Wechselelementen, in denen das auszuwechselnde Werkzeug abgelegt und von denen ein neues Werkzeug zur Aufnahme und zum Spannen bereitgestellt wird.

Durch die EP-A-246 384 ist eine Vorrichtung der eingangs genannten Art bekanntgeworden, die aus einem Halteelement mit einem Spannzapfen besteht, der in eine Aufnahmeöffnung eines Spannelementes eingreift. Ein Wechselelement dient der Verschiebung eines Konus gegen die Wirkung einer Feder aus einer entsprechend konusförmig ausgebildeten Öffnung in dem Spannzapfen.

Der Erfindung liegt nun die Aufgabe zugrunde, eine Vorrichtung der eingangs genannten Art zu schaffen, die ein schnelles und dennoch sicheres Spannen und Wechseln von Werkzeugen ermöglicht und dabei eine geringe Bauhöhe aufweist. Die Verriegelung soll selbsttätig und mechanisch erfolgen, ohne daß Schläuche und Leitungen verwendet werden.

Diese Aufgabe wird grundsätzlich durch die Merkmale des Patentanspruches 1 gelöst.

Die Vorrichtung nach der Erfindung weist an dem Halteelement einen Spannzapfen auf, der in der Spann- oder Verriegelungsstellung in der Aufnahmeöffnung des Spannelementes liegt. Die Haltenuten sind in dem Spannzapfen ausgebildet. In diese Haltenuten greifen die Spannschieber ein, die in der Spannstellung sicher durch die Federn gehalten werden. Zum Wechseln wird das Spannelement zu dem Wechselelement bewegt und von diesem gehalten. Die Spannschieber werden aus den Haltenuten gegen die Wirkung der Federn herausgeschoben, so daß das Maschinenteil mit dem Halteelement von dem Werkzeug weg und zu einem neuen Werkzeug bewegt werden kann. Dort erfolgt die Einbringung des Halteteils mit seinem Spannzapfen in umgekehrter Weise in das Spannelement eines neuen Werkzeuges.

In den Ansprüchen 2 bis 5 sind vorteilhafte Ausgestaltungen unter Schutz gestellt.

Im folgenden wird die Erfindung unter Hinweis auf die Zeichnung anhand eines Ausführungsbeispieles näher erläutert.

Es zeigt :
- Fig. 1: eine Seitenansicht eines Halteelementes und eines Spannelementes kurz vor der Verbindung dieser beiden Teile;
- Fig. 2: eine Ansicht des Spannelementes der Fig. 1 von unten;
- Fig. 3: eine Ansicht eines Wechselelementes mit in diesem angeordneten Spannelement; und
- Fig. 4: eine Seitenansicht des Wechselelementes nach Fig. 1 mit dem Spannelement und einem über diesem gezeigten Halteelement kurz vor der Verbindung oder kurz nach der Trennung.

Die in der Zeichnung dargestellte Vorrichtung besteht aus drei Grundelementen:
1. einem Halteelement A, das an der nicht gezeigten Roboterhand einer Arbeitsmaschine befestigt ist;
2. einem Spannelement B, an dessen Unterseite ein nicht gezeigtes Werkzeug, z.B. ein Schweißgerät, befestigt ist;
3. einem Wechselelement C, das die beiden Elemente A und B voneinander trennt und miteinander verbindet.

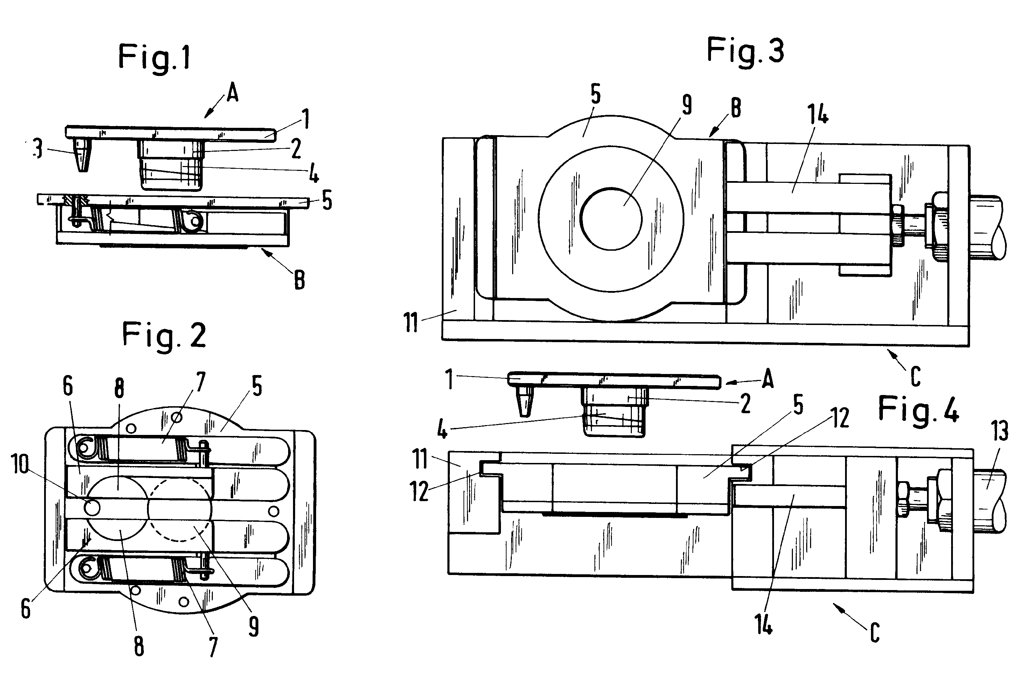

Das Halteelement A besteht aus einer Grundplatte 1 mit einem Spannzapfen 2 und einem exzentrisch zu diesem angeordneten Paßstift 3. In dem Spannzapfen 2 sind zwei Haltenuten 4 einander gegenüberliegend an der zylindrischen Fläche des Spannzapfens ausgebildet. Sie sind, wie in Fig. 1 erkennbar, keilförmig.

Das Spannelement B besteht aus einem Rahmen 5, der die einzelnen Bauteile trägt. An dem Rahmen 5 sind zwei Spannschieber 6 spiegelsymmetrisch zueinander angeordnet und senkrecht zur Achse des Spannzapfens verschiebbar. Jeder Spannschieber 6 wird durch eine Feder 7 gehalten, die ihren Spannschieber in die Spann- oder Verriegelungsstellung drückt. Unter Berücksichtigung der Darstellung der Fig. 2 liegt der Spannschieber in der Verriegelungsstellung links, so wie gezeigt. In dem Spannrahmen 5 ist eine Aufnahmeöffnung 9 zur Aufnahme des Spannzapfens 2 ausgebildet. Weiterhin ist eine Paßöffnung 10 für den Paßstift 3 vorgesehen. Durch die Anordnung des Paßstiftes 3 in der Paßöffnung 10 erfolgt eine winkelgerechte Positionierung. In jedem Spannschieber 6 ist eine bei dieser Ausführungsform ungefähr halbkreisförmige Spannöffnung 8 vorgesehen, die in der Wechselstellung mit der Aufnahmeöffnung 9 fluchten, damit der Spannzapfen 2 in Richtung seiner Achse frei bewegbar ist.

Das Wechselelement C besteht aus einem Rahmen 11, in dem parallele Schienen 12 ausgebildet sind. Weiterhin ist ein Betätigungszylinder 13 vorgesehen, der eine Wechselgabel 14 vor- und zurückschieben kann. Die Wechselgabel 14 ist so dimensioniert und ausgebildet, daß sie mit den Spannschiebern 6 zusammenarbeitet.

Im Betrieb arbeitet die Vorrichtung so, daß der Roboterarm mit dem an seiner Roboterhand befestigten Halteelement A und dem wiederum an diesem befestigten Spannelement 5 mit Werkzeug in ein Wechselelement C bewegt wird, wenn das Werkzeug gewechselt werden soll.

Das Spannelement B wird in die Schienen 12 eingeschoben. Der Betätigungszylinder 13 wird betätigt, so daß die Wechselgabel 14 die Spannschieber 6 gegen die Kraft der Federn 7 aus der in Fig. 2 gezeigten Stellung in eine Stellung bewegt, in der die als Keile wirkenden Abschnitte der Spannschieber aus dem Eingriff mit den Haltenuten 4 gelangen. In dieser Stellung fluchten die Spannöffnungen 8 mit der Aufnahmeöffnung 9. Der Spannzapfen ist dann frei, so daß er aus der Aufnahmeöffnung 9 herausbewegt werden kann.

Wenn dieses geschehen ist, wird der Roboterarm mit dem Spannelement A zu einem weiteren Wechselelement C bewegt, in dem ein neues Spannelement B mit einem anderen Werkzeug bereitsteht. Der Betätigungszylinder 13 ist so erregt, daß die Wechselgabel 14 die Spannschieber gegen die Wirkung der Federn vorgeschoben hat, so daß der Spannzapfen 2 in die fluchtenden Öffnungen 8 und 9 hineinbewegt werden kann. Die Wechselgabel 14 wird dann in die Ausgangsstellung zurückbewegt. Die Spannschieber 6 werden durch die Federn 7 in die Verriegelungs- oder Spannstellung gezogen und das neue Werkzeug ist an dem Roboterarm befestig. Das Spannelement mit dem neuen Werkzeug kann dann aus dem Wechselelement herausbewegt werden und die ihm zugedachten Arbeiten durchführen.

Praktisch sind also immer mindestens zwei Wechselelemente vorhanden, eines um das auszuwechselnde Werkzeug mit dem zugehörigen Spannelement aufzunehmen und eines um das neue Werkzeug mit seinem Spannelement bereitzustellen. Wenn mehrere Werkzeuge bereitgestellt werden sollen, ist eine entsprechende Anzahl von Wechselelementen erforderlich.

Die drei Elemente A, B und C, insbesondere das Halteelement und das Spannelement, weisen eine geringe Bauhöhe auf. Sämtliche Schläuche und Leitungen führen direkt zu dem Werkzeug. Die Vorrichtung ist leicht und sicher zu betätigen und die Verriegelung ist formschlüssig, so daß ein unbeabsichtigtes Lösen nicht möglich ist. Die Haltenuten sind keilförmig, d.h. sie verjüngen sich in Richtung der Zugkraft der Federn 7.

## Patentansprüche

1. Vorrichtung zum Befestigen und Wechseln von Werkzeugen an bewegbaren Arbeitsmaschinen, z.B. Roboterarmen, bestehend aus:
a) einem an dem Arbeitsmaschinenteil befestigten Halteelement (A) mit einem Spannzapfen (2), an dem senkrecht zu seiner Achse verlaufende Haltenuten (4) ausgebildet sind;
b) einem an dem Werkzeug befestigten Spannelement (B) mit einer Aufnahmeöffnung (9) für den Spannzapfen (2) und mit in Richtung der Haltenuten (4) gegen die Kraft von Federn (7) verschiebbaren, in die Haltenuten formschlüssig eingreifenden Spannschiebern (6) mit je einer Spannöffnung (8), die in der Werkzeugwechselstellung mit der Aufnahmeöffnung (9) fluchten;
c) einem Wechselelement (C) zur Aufnahme des Spannelementes (B) in der Wechselstellung mit einer motorisch mittels Betätigungszylinder (13) verschiebbaren Wechselgabel (14) zur Verschiebung der Spannschieber (6) gegen die Kraft der Federn (7) aus der Spann- in die Wechselstellung.

2. Vorrichtung nach Anspruch 1, dadurch gekennzeichnet, daß an dem Halteelement (A) exzentrisch zu dem Spannzapfen (2) ein Paßstift (3) angeordnet ist.

3. Vorrichtung nach Anspruch 1, dadurch gekennzeichnet, daß die beiden Spannschieber (6) spiegelsymmetrisch ausgebildet und je an einer Seite der Aufnahmeöffnung (9) senkrecht zu ihrer Achse verschiebbar angeordnet sind, und daß ihre Spannöffnung (8) ungefähr die halbe Querschnittsfläche der Aufnahmeöffnung (9) aufweist.

4. Vorrichtung nach Anspruch 1, dadurch gekennzeichnet, daß jede Spannut (4) derart keilförmig ausgebildet ist, daß sie sich in Spannrichtung (Zugkraftrichtung der Federn (7)) verjüngt.

5. Vorrichtung nach Anspruch 1, dadurch gekennzeichnet, daß in einem Rahmen (11) des Wechselelementes (C) Schienen (12) zur Aufnahme des Spannelementes (B) in der Wechselstellung vorgesehen sind.

## Claims

1. Apparatus for fixing and changing tools on movable working machines, e.g. robot arms, comprising:
a) a holding element (A) with a truing-up trunnion (2) fixed to the working machine port and on which are constructed holding grooves (4) perpendicular to its axis,
b) a fixing element (B) fixed to the tool and having a reception opening (9) for the truing-up trunnion (2) and with fixing slides (6) positively engaging in the holding grooves and displaceable counter to the tension of springs (7) in the direction of the holding grooves (4) and in each case having a fixing opening (8), which is aligned in the tool changing position with the reception opening (9),
c) a change element (C) for receiving the fixing element (B) in the change position with a change fork (14) motor displaceable by means of operating cylinders (13) for the displacement of the fixing slide (6) counter to the tension of the springs (7) from the fixing into the change position.

2. Apparatus according to claim 1, characterized in that a fitting pin (3) is provided eccentrically to the truing-up trunnion (2) on the holding element (A).

3. Apparatus according to claim 1, characterized in that the two fixing slides (6) are constructed in mirror symmetrical manner and each is displaceably arranged on one side of the reception opening (9) perpendicular to the axis thereof and that the fixing opening (8) thereof has approximately half the cross-sectional surface of the reception opening (9).

4. Apparatus according to claim 1, characterized in that each holding groove (4) has a wedge-shaped construction in such a way that it tapers in the fixing direction (tension direction of the springs (7)).

5. Apparatus according to claim 1, characterized in that rails (12) are provided in a frame (11) of the change element (C) for receiving the fixing element (B) in the change position.

## Revendications

1. Dispositif de fixation et de changement d'outils sur des machines opératrices mobiles, par exemple des bras-robots, composé de :
a) un élément de support (A) fixé sur la partie de machine opératrice et comprenant un tenon de fixation (2) sur lequel sont réalisées des encoches d'arrêt (4) s'étendant perpendiculairement à l'axe dudit tenon ;
b) un élément de fixation (B) fixé sur l'outil et comprenant une ouverture de réception (9) pour le tenon de fixation (2) et des coulisseaux de serrage (6) qui peuvent être déplacés dans la direction des encoches d'arrêt (4) contre la force de ressorts (7), s'engagent par complémentarité de formes dans les encoches d'arrêt et sont munis chacun d'une ouverture de serrage (8), lesquelles ouvertures sont alignées, dans la position de changement d'outil, avec l'ouverture de réception (9) ;
c) un élément de changement d'outil (C) pour recevoir l'élément de fixation (B) dans la position de changement d'outil comprenant une fourche de changement d'outil (14) qui peut être déplacée par moteur au moyen d'un vérin de commande (13) et sert à déplacer les coulisseaux de serrage (6) contre la force des ressorts (7) de la position de serrage dans la position de changement d'outil.

2. Dispositif de changement d'outil selon la revendication 1, caractérisé en ce qu'un goujon d'assemblage (3) excentré par rapport au tenon de serrage (2) est disposé sur l'élément de support (A).

3. Dispositif selon la revendication 1, caractérisé en ce que les deux coulisseaux de serrage (6) sont symétriques et sont disposés de chaque côté de l'ouverture de réception (9) de manière à pouvoir se déplacer perpendiculairement à son axe et en ce que la section transversale de l'ouverture de serrage (8) représente à peu près la moitié de celle de l'ouverture de réception (9).

4. Dispositif selon la revendication 1, caractérisé en ce que chaque encoche d'arrêt (4) est réalisée en forme de clavette de telle manière qu'elle diminue dans la direction de serrage (direction de la traction des ressorts (7)).

5. Dispositif selon la revendication 1, caractérisé en ce que des rails (12) destinés à recevoir l'élément de serrage (B) dans la position de changement d'outil sont prévus dans le cadre (11) de l'élément de changement d'outil (C).
